# EUROPÄISCHE PATENTSCHRIFT

(11) **EP 0 766 780 B1**
(45) Veröffentlichungstag und Bekanntmachung des Hinweises auf die Patenterteilung: **05.08.1998**
(21) Anmeldenummer: 95924896.4
(22) Anmeldetag: 21.06.1995
(51) Int. Cl.: F01N 3/20, F01N 9/00, B60R 16/02

(54) **VERFAHREN ZUM STEUERN DER ELEKTRISCHEN BEHEIZUNG EINES KATALYSATORS**
METHOD OF CONTROLLING THE ELECTRIC HEATING OF A CATALYTIC CONVERTER
PROCEDE DE COMMANDE DU CHAUFFAGE ELECTRIQUE D'UN CATALYSEUR

(30) Priorität: 24.06.1994 DE 4422198
(43) Veröffentlichungstag der Anmeldung: 09.04.1997
(73) Patentinhaber: AUDI AG, 85045 Ingolstadt (DE); DAIMLER-BENZ AKTIENGESELLSCHAFT, 70567 Stuttgart (DE); Dr.Ing.h.c. F. Porsche Aktiengesellschaft, 70435 Stuttgart (DE); Bayerische Motoren Werke Aktiengesellschaft, 80788 München (DE); Volkswagen Aktiengesellschaft, 38436 Wolfsburg (DE)
(72) Erfinder: STREIT, Walter, D-85049 Ingolstadt (DE); MERTL, Rainer, D-85748 Garching (DE); OTTO, Erhard, D-82194 Gröbenzell (DE); DONNERSTAG, Achim, D-38104 Braunschweig (DE); MAUTE, Kurt, D-71067 Sindelfingen (DE); WIRTH, Alfred, D-89610 Oberdischingen (DE); ZAG, Wolfgang, D-71287 Flacht (DE)
(86) Internationale Anmeldenummer: EP9502412
(87) Internationale Veröffentlichungsnummer: WO9600343

(56) Entgegenhaltungen:
- EP-A- 0 402 641
- EP-A- 0 500 287
- WO-A-92/14631
- WO-A-93/11003
- DE-A- 3 939 068
- DE-A- 4 028 242
- DE-A- 4 223 854
- DE-A- 4 326 384
- US-A- 4 082 992
- US-A- 4 990 885
- PATENT ABSTRACTS OF JAPAN vol. 18 no. 279 (M-1612) ,27.Mai 1994 & JP,A,06 050138 (NISSAN MOTOR CO LTD) 22.Februar 1994,

## Beschreibung

Die Erfindung betrifft ein Verfahren zum Steuern der elektrischen Beheizung eines Katalysators zur Abgasentgiftung einer Brennkraftmaschine in einem Kraftfahrzeug, gemäß dem Oberbegriff des Patentanspruches 1.

Ein derartiges Verfahren beschreibt die DE-A-39 39 068. Dabei wird unter anderem vorgeschlagen, zwei Batterien zu verwenden, wobei die eine Batterie als Heizbatterie verwendet und während der Aufheizphase des Katalysators elektrisch von der anderen Batterie bzw. vom Bordnetz des Kraftfahrzeuges getrennt ist. Der Vorteil einer derartigen Anordnung liegt insbesondere in der Vermeidung unzulässiger Spannungseinbrüche, die während der Beheizung des Katalysators Störungen an elektrischen oder elektronischen Betriebseinrichtungen des Kraftfahrzeuges verursachen könnten. Die ordnungsgemäße Funktion der Katalysatorbeheizung wird bei diesem Verfahren nicht überwacht.

Aufgabe der Erfindung ist es deshalb, ein Verfahren zum Steuern der elektrischen Beheizung eines Katalysators anzugeben, mit dem die ordnungsgemäße Funktion im Kraftfahrzeug ständig überwachbar ist.

Diese Aufgabe wird erfindungsgemäß mit den kennzeichnenden Merkmalen des Patentanspruches 1 und/oder des Patentanspruches 8 gelöst. Vorteilhafte Weiterbildungen des Verfahrens sind den weiteren Patentansprüchen entnehmbar.

Erfindungsgemäß wird also über eine ggf. herkömmliche Spannungsüberwachungsschaltung bei erfülltem Kriterium "Heizung ein" die Bordnetzspannung und darauffolgend bei geöffnetem Trennschalter die Spannung der Heizbatterie abgefragt und bei unterhalb vorgegebenen Schwellwerten - die eine ausreichende Beheizung des Katalysators nicht mehr sicherstellen - die Heizung auf "aus" gesetzt und ein Fehlersignal generiert. Zusätzlich oder alternativ dazu kann über einen Temperatursensor im Katalysator dessen Temperaturzunahme über der Zeit abgefragt und - sofern diese Zunahme unterhalb einer vorgegebenen Kennlinie liegt - zumindest ein Fehlersignal generiert und ggf. der Fehler in einem auslesbaren Fehlerspeicher abgelegt werden. Dies ermöglicht eine ständige Überwachung des Katalysator-Heizungssystems im Kraftfahrzeug, wobei durch das Fehlersignal - bevorzugt eine Warnleuchte - die Bedienungsperson bei angezeigter, nicht ordnungsgemäßer Beheizung entsprechende Schritte einleiten kann. Über den Fehlerspreicher kann beispielsweise in einer Service-Station ausgelesen werden, ob die Funktion der Batterien oder die der verwendeten Heizelemente nicht ordnungsgemäß ist.

Ferner kann bevorzugt der Spannungsverlauf während der Beheizung überwacht werden, woraus ebenfalls Schlüsse auf eine nicht ordnungsgemäße Funktion ziehbar sind, die zur einer schnellen Abstellung der Funktionsstörung beitragen können. Beispielsweise muß bei ordnungsgemäßen Heizelementen unmittelbar beim Schließen des Leistungsschalters ein Spannungseinbruch auftreten, der auf der hohen Stormaufnahme der Heizelemente beruht. Tritt dieser Spannungseinbruch nicht auf, so kann auf defekte Heizelemente oder auf eine Leitungsunterbrechung geschlossen werden. Sinkt andererseits die Spannung der Heizbatterie nach dem Schließen des Leistungsschalters über der Zeit in einem zu steilen Gradienten ab, so läßt dies auf einen schlechten Batteriezustand oder auf korrodierte Leitungskontakte schließen.

Beim Wiederverbinden der Heizbatterie mit dem Bordnetz nach erfolgter Beheizung des Katalysators ist sicherzustellen, daß im Bordnetz kein zu starker Spannungsabfall eintritt, der ggf. andere Verbraucher, insbesondere sicherheitsrelevante Systemsteuerungen, in ihrer Funktion beeinträchtigt. Dies geschieht insbesondere durch die im Patentanspruch 4 aufgeführten Merkmale entweder in ihrer Gesamtheit oder als alternative Schritte.

Da das Wiederaufladen der Heizbatterie nach der jeweiligen Katalysatorbeheizung möglichst schnell erfolgen muß, wird gemäß den Merkmalen der Ansprüche 5 - 7 vorgeschlagen, den Ladestrom entsprechend einer Schnelladung zu regeln und zu überwachen.

Ein Ausführungsbeispiel der Erfindung ist im folgenden mit weiteren Einzelheiten näher erläutert. Die schematische Zeichnung zeigt in
- Fig. 1: eine Vorrichtung zum elektrischen Beheizen eines Katalysators in einem Abgassystem einer Brennkraftmaschine in einem Kraftfahrzeug und
- Fig. 2: ein Ablaufdiagramm der in die Systemsteuerung integrierten Verfahrensschritte.

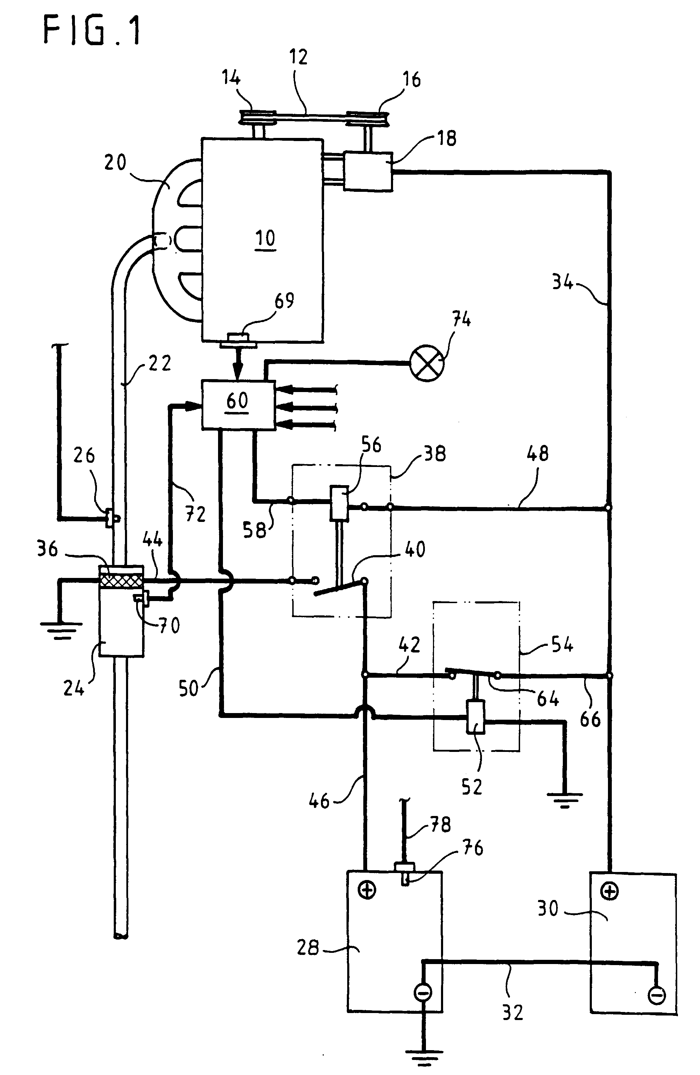

In der Fig. 1 ist mit 10 eine Brennkraftmaschine bezeichnet, die in bekannter Weise über einen Antriebsriemen 12 und entsprechende Riemenscheiben 14,16 einen elektrischen Generator 18 antreibt. Das von der Brennkraftmaschine emittierte Abgas wird über einen Abgaskrümmer 20 und ein Abgasvorrohr 22 einem Dreiwegekatalysator 24 zugeleitet und von dort in nicht näher dargestellter Weise an die Atmosphäre abgegeben. In dem Abgasvorrohr 22 ist eine Lamdasonde 26 vorgesehen, die in bekannter Weise die Brennstoffzumeßeinrichtung der Brennkraftmaschine derart ansteuert, daß ein nahezu stächiometrisches Brennstoff-Luft-Verhältnis aufrecht erhalten bleibt.

Das nur teilweise dargestellte, elektrische Bordnetz des Kraftfahrzeuges weist zwei Batterien 28,30 als Stromspeicher auf, deren Minuspole über eine Leitung 32 miteinander verbunden sind. Der Pluspol der einen Batterie 30 ist an das Bordnetz des Kraftfahrzeuges über eine Leitung 34 angeschlossen, unter anderem an den Leistungsausgang des Generators 18.

Der Katalysator 24 ist mit einer elektrischen Heizung 36 ausgerüstet, die beispielsweise durch mehrere in den Katalysator ragende Glühkerzen gebildet sein kann. Die Heizung 36 ist einerseits an Minuspotential gelegt, während deren plusseitiger Eingang an einen Leistungsschalter 38 angeschlossen ist. Der Leistungsschalter 38 ist als ein Schließerrelais mit einem Arbeitskontakt 40 ausgebildet, wobei dieser Arbeitskontakt 40 über eine Leitung 44 mit der Heizung 36 und über eine Leitung 46 mit der Heizbatterie 28 verbunden ist. Die Steuerwicklung 56 des Leistungsschalters 38 ist plusseitig über eine Leitung 48 mit der Leitung 34 des Bordnetzes und minusseitig über eine Leitung 58 mit einem elektronischen Steuergerät 60 verbunden.

Ferner ist zwischen den beiden Batterien 28,30 ein Trennschalter 54 vorgesehen, der als Öffnerrelais ausgebildet mit einem Arbeitskontakt 64 die beiden Batterien 28,30 elektrisch voneinander trennen kann, wobei der Arbeitskontakt 64 die plusseitig zwischen den beiden Batterien vorgesehenen Leitungen 42,66 unterbricht. Die Steuerwicklung 52 des Trennschalters 54 liegt einerseits ständig an Minuspotential und ist plusseitig über eine Leitung 50 an das elektronische Steuergerät 60 angeschlossen.

Das elektronische Steuergerät 60, welches die Steuerwicklungen 52,56 des Leistungsschalters 38 und des Trennschalters 54 ansteuert, weist mehrere Eingänge auf, über die die Temperatur der Brennkraftmaschine 10 über einen Temperaturfühler 69, die Außentemperatur über einen weiteren, nicht dargestellten Temperaturfühler und schließlich über einen Temperaturfühler 70 und eine Leitung 72 die Temperatur des Katalysators erfaßt werden. Ferner sind in nicht dargestellter Weise Verbindungen vorgesehen, über die die Spannung des Bordnetzes (z. B. durch Anschluß an die Leitung 34) und (z. B. durch eine Verbindung mit der Leitung 46) die Spannung der Heizbatterie 28 erfaßbar sind.

Über das elektronische Steuergerät 60 kann eine am nicht dargestellten Amaturenbrett des Kraftfahrzeuges vorgesehene Warnleuchte 74 angesteuert werden, die auf eine nicht ordnungsgemäße Beheizung des Katalysators 24 hinweist.

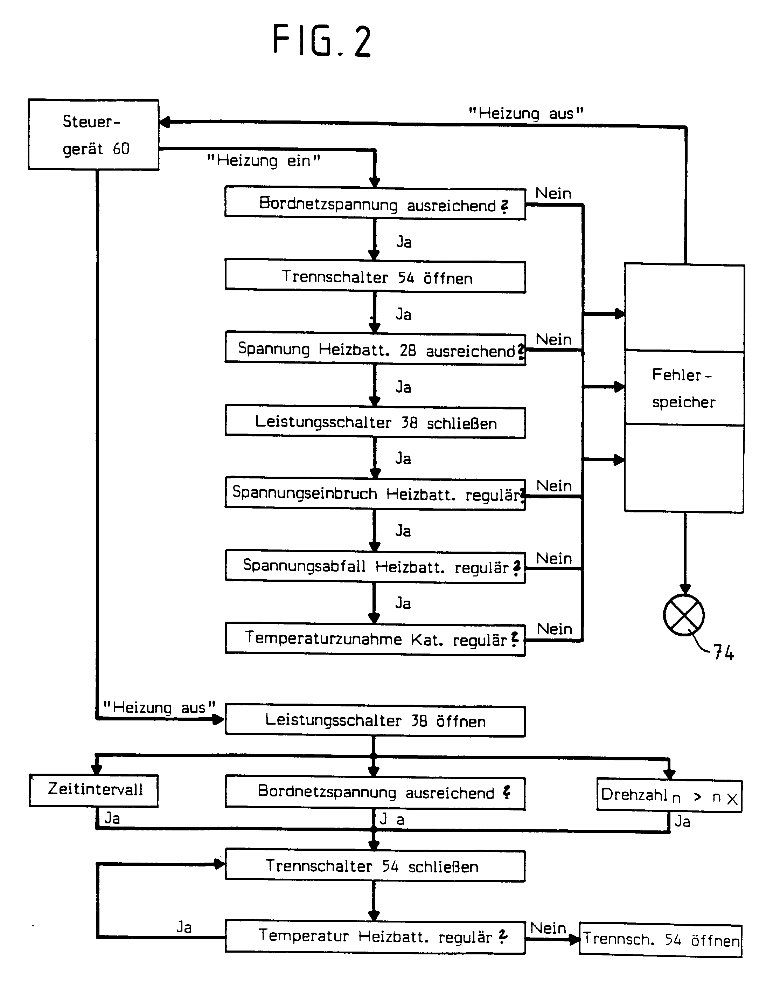

Bei einem Kaltstart der Brennkraftmaschine 10 wird über das nicht dargestellte Motorsteuergerät zunächst dem elektronischen Steuergerät 60 der Befehl "Heizung ein" vorgegeben (vgl. Fig. 2, Ablaufschema). In dem Steuergerät 60 werden dadurch durch entsprechende elektronische Verknüpfungsschaltungen folgende Abläufe gestartet:

Zunächst wird über eine nicht dargestellte Spannungserfassungsschaltung die Spannung des Bordnetzes des Kraftfahrzeuges überprüft und sofern diese Spannung unterhalb eines definierten Schwellwertes liegt, ein Fehlersignal generiert, aufgrund dessen die Warnleuchte 74 angesteuert wird. Ferner wird der Fehler in einen in dem Steuergerät 60 integrierten, auslesbaren Fehlerspeicher abgelegt und schließlich der Ablauf im Steuergerät unterbrochen bzw. die Heizung auf "aus" gesetzt.

Ist die Spannung des Bordnetzes ausreichend, so wird der Trennschalter 54 geöffnet, so daß die Batterie 28 von dem Bordnetz des Kraftfahrzeuges elektrisch getrennt ist. Bei geöffneten Trennschalter, dessen Funktion ggf. über einen Sicherheitskontakt abfragbar sein kann, wird über die integrierte Spannungsmeßschaltung nunmehr die Spannung der Heizbatterie überprüft und sofern diese unterhalb eines definierten Schwellwertes liegen sollte, ebenfalls das Fehlersignal generiert, der Fehlerspeicher entsprechend angesteuert und die Heizung wiederum auf "aus" gesetzt.

Ist die Spannung der Heizbatterie 28 ebenfalls ausreichend, so wird nunmehr der Leistungsschalter 38 durch entsprechende Ansteuerung des Relais 40,56 geschlossen und die Heizung eingeschaltet. Dabei wird über die Spannungsmeßschaltung in dem elektronischen Steuergerät 60 geprüft, ob mit dem Schließen des Leistungsschalters 38 ein kurzzeitiger Spannungseinbruch auftritt und ob der Spannungsabfall beim anschließenden Beheizen im Rahmen einer vorgegebenen Kennlinie liegt. Der Spannungseinbruch sowie der einer regulären Beheizung über der Zeit entsprechende Spannungsabfall können empirisch ermittelt und festgesetzt sein, so daß bei von diesen ermittelten Werten abweichenden Werten auf Systemfehler geschlossen werden kann.

Mit dem Einschalten der Heizung 36 des Katalysators 24 wird ferner über den Temperatursensor 70 eine Temperaturüberwachung im elektronischen Steuergerät 60 ausgeführt, wobei die Katalysatortemperatur über der Zeit erfaßt und mit abhängig von der Außentemperatur abgelegten, ggf. empirisch ermittelten Temperaturwerten verglichen werden. Werden die regulären Temperaturwerte innerhalb des erfaßten Zeitintervalls nicht erreicht, so kann ebenfalls auf eine Fehlfunktion der Katalysatorbeheizung geschlossen werden. Derartige Fehlfunktionen werden ebenfalls im Fehlerspeicher abgelegt, zugleich wird die Warnlampe 74 angesteuert.

Nach ausreichender, regulärer Beheizung des Katalysators 24 - wobei die Heizzeit durch das nicht dargestellte Steuergerät der Brennkraftmaschine vorgegeben sein kann, erhält das Steuergerät 60 den Befehl "Heizung aus" wodurch dieses zunächst den Leistungsschalter 38 wieder öffnet.

Anschließend wird bevorzugt in einer UND-Schaltung geprüft, ob die Bordnetzspannung ausreichend hoch ist, ob die Drehzahl der Brennkraftmaschine grösser einem vorgegebenen Drehzahlschwellwert liegt und ob ein definiertes Zeitintervall ab dem Abschalten der Heizung 36 durchlaufen ist. Bei Vorliegen dieser drei Kriterien wird der Trennschalter 54 wieder geschlossen und damit die Heizbatterie 28 wieder an das Bordnetz des Kraftfahrzeuges geschaltet.

Bei geschlossenem Trennschalter 54 erfolgt der Ladevorgang der Batterie 28 insbesondere über den Generator 18. Die Temperatur der Heizbatterie 28 wird dabei über einen Temperatursensor 76 überwacht, der über eine Leitung 78 mit dem elektronischen Steuergerät 60 verbunden ist. Bei einem unzulässig hohen Temperaturanstieg der Heizbatterie 28 wird der Trennschalter 54 über das Steuergerät 60 wieder geöffnet oder der Ladestrom zurückgeregelt.

Anstelle des dargestellten Ein-/Austrennschalters 54 kann auch ein elektronischer Schalter vorgesehen sein, der eine Regelung des Ladestroms nach den bekannten Kriterien der Schnelladung ermöglicht. Es versteht sich ohnehin, daß in der konkreten, baulichen Ausführung der Leistungsschalter 38 und der Trennschalter 54 innerhalb des elektronischen Steuergerätes 60 integriert sind, schon zur Verminderung des erforderlichen Leitungsaufwandes.

## Patentansprüche

1. Verfahren zum Steuern der elektrischen Beheizung (36) eines Katalysators (24) zur Abgasentgiftung einer Brennkraftmaschine (10) in einem Kraftfahrzeug, bei dem zwei Batterien (28,30) vorgesehen sind, die mit dem Bordnetz des Kraftfahrzeuges verbunden sind, wobei mittels eines elektrischen Steuergerätes (60) temperatur- und/oder ladezustandsabhängig die eine Batterie (28) über einen Leistungsschalter (38) mit der Katalysatorheizung (36) verbindbar und dabei mittels eines Trennschalters (54) elektrisch von der zweiten Batterie (30) und dem Bordnetz trennbar ist, dadurch gekennzeichnet, daß bei erfülltem Kriterium "Heizung ein" die Bordnetzspannung und darauffolgend bei geöffnetem Trennschalter (54) die Heizbatteriespannung erfaßt und bei unterhalb vorgegebenen Schwellwerten die Heizung (36) auf "aus" gesetzt und ein Fehlersignal (74) generiert wird.

2. Verfahren nach Anspruch 1, dadurch gekennzeichnet, daß bei ausreichenden Spannungswerten der Leistungsschalter (38) geschlossen wird, daß der Spannungsverlauf überwacht wird und daß bei einem gleichbleibenden Spannungswert die Heizung (36) auf "aus" gesetzt und/oder das Fehlersignal (74) generiert wird.

3. Verfahren nach den Ansprüchen 1 und 2, dadurch gekennzeichnet, daß während der Katalysatorbeheizung die Spannung der Heizbatterie (28) überwacht und bei Unterschreiten eines Schwellwertes die Heizung (36) auf "aus" gesetzt und/oder das Fehlersignal (74) generiert wird.

4. Verfahren nach den Ansprüchen 1 - 3, dadurch gekennzeichent, daß nach dem Schließen und wieder Öffnen des Leistungsschalters (38) der Trennschalter (54) abhängig von der Bordnetzspannung und/oder der Drehzahl der Brennkraftmaschine und/oder deren Temperatur und/oder nach Ablauf eines Zeitintervalles wieder geschlossen wird.

5. Verfahren nach einem oder mehreren der Ansprüche 1 - 4, dadurch gekennzeichnet, daß die Heizbatterie (28) mit einem geregelten Ladestrom geladen wird.

6. Verfahren nach Anspruch 5, dadurch gekennzeichnet, daß der Ladestrom abhängig von der Spannung und/oder der Temperatur der Heizbatterie (28) nach einem Ladekennfeld optimiert wird.

7. Verfahren nach den Ansprüchen 5 oder 6, dadurch gekennzeichnet, daß der Trennschalter (54) als veränderlicher Widerstand zur Steuerung des Ladestromes ausgebildet wird.

8. Verfahren zum Steuern der elektrischen Beheizung (36) eines Katalysators (24) zur Abgasentgiftung einer Brennkraftmaschine (10) in einem Kraftfahrzeug, bei dem zwei Batterien (28,30) vorgesehen sind, die mit dem Bordnetz des Kraftfahrzeuges verbunden sind, wobei mittels eines elektrischen Steuergerätes (60) temperatur- und/oder ladezustandsabhängig die eine Batterie (28) über einen Leistungsschalter (38) mit der Katalysatorheizung (36) verbindbar und dabei mittels eines Trennschalters (54) elektrisch von der zweiten Batterie (30) und dem Bordnetz trennbar ist, dadurch gekennzeichnet, daß bei erfülltem Kriterium "Heizung ein" über zumindest einen Temperatursensor (70) die Temperatur des Katalysators (24) über der Zeit überwacht wird und daß bei Abweichung von vorgegebenen Werten ein Fehlersignal generiert und/oder die Heizung auf "aus" gesetzt wird.

9. Verfahren nach einem oder mehreren der vorhergehenden Ansprüche, dadurch gekennzeichnet, daß einzelne oder alle Fehlersignale in einem auslesbaren Fehlerspeicher gespeichert und/oder optisch angezeigt werden.

## Claims

1. Method of controlling the electric heating (36) of a catalytic converter (24) for exhaust gas decontamination of an internal combustion engine (10) of a motor vehicle, in which two batteries (28,30) are provided which are connected to the wiring system of the motor vehicle, wherein, dependent upon temperature and/or state of charge, the one battery (28) can be connected to the catalytic converter heater (36), via a power switch (38), by means of an electrical control device (60), and thereby can be electrically disconnected by means of an isolating switch (54) from the second battery (30) and from the vehicle wiring system, characterised in that upon meeting the criterion "heater on" the vehicle wiring system voltage is captured and thereupon with opened isolating switch (54) the heater battery voltage is captured, and in the case of values below predetermined threshold values the heater (36) is set to "off" and an error signal (74) is generated.

2. Method according to claim 1, characterised in that if the voltage values are sufficient the power switch (38) is closed, the voltage development is monitored, and that if the voltage value remains constant the heater (36) is set to "off" and/or the error signal (74) is generated.

3. Method according to claims 1 and 2, characterised in that during catalytic converter heating, the voltage of the heater battery (28) is monitored and if the value goes below a threshold value, the heater (36) is set to "off" and/or the error signal (74) is generated.

4. Method according to claims 1 - 3, characterised in that after closing and again opening the power switch (38), the isolating switch (54) is closed again dependent upon the voltage of the vehicle wiring system and/or the speed of the engine and/or its temperature and/or after a time interval has elapsed.

5. Method according to one or more of claims 1 - 4, characterised in that the heater battery (28) is charged by a regulated charging current.

6. Method according to claim 5, characterised in that the charging current is optimised in accordance with loading characteristics, in dependence upon the voltage and/or temperature of the heater battery (28).

7. Method according to claims 5 or 6, characterised in that the isolating switch (54) is constructed as a variable resistor to control the charging current.

8. Method of controlling the electric heating (36) of a catalytic converter (24) for exhaust gas decontamination of an internal combustion engine (10) of a motor vehicle, in which two batteries (28,30) are provided which are connected to the wiring system of the motor vehicle, wherein, dependent upon temperature and/or state of charge, the one battery (28) can be connected to the catalytic converter heater (36), via a power switch (38), by means of an electrical control device (60), and thereby can be electrically disconnected by means of an isolating switch (54) from the second battery (30) and from the vehicle wiring system, characterised in that, upon meeting the criterion "heater on", the temperature of the catalytic converter (24) is monitored over time by at least one temperature sensor (70), and that upon deviation from predetermined values an error signal is generated and/or the heater is set to "off".

9. Method according to one or more of the preceding claims, characterised in that individual or all error signals are stored in a readable error memory and/or are visually displayed.

## Revendications

1. Procédé de commande du chauffage électrique (36) d'un catalyseur (24) pour l'épuration des gaz d'échappement d'un moteur à combustion interne (10) dans un véhicule automobile, selon lequel il est prévu deux batteries (28, 30), qui sont reliées au réseau de bord du véhicule automobile, l'une (28) des batteries pouvant alors, par l'intermédiaire d'un interrupteur de puissance (38), être reliée, en fonction de la température et/ou de l'état de charge, au chauffage (36) du catalyseur, au moyen d'un appareil de commande électrique (60), et pouvant, dans ce cas, être isolée électriquement de la seconde batterie (30) et du réseau de bord au moyen d'un sectionneur (54), caractérisé en ce que, dans le cas où le critère "chauffage en service" est satisfait, la tension du réseau de bord est captée et, par la suite, lorsque le sectionneur (54) est ouvert, la tension de la batterie de chauffage est captée et, en dessous de valeurs de seuil prédéterminées, le chauffage (36) est mis à "l'arrêt" et un signal d'erreur (74) est engendré.

2. Procédé selon la revendication 1, caractérisé en ce que, en présence de valeurs de tension suffisantes, l'interrupteur de puissance (38) est fermé, en ce que l'évolution de la tension est surveillée et en ce que, en présence d'une valeur de tension constante, le chauffage (36) est mis à "l'arrêt" et/ou le signal d'erreur (74) est engendré.

3. Procédé selon les revendications 1 et 2, caractérisé en ce que, pendant le chauffage du catalyseur, la tension de la batterie de chauffage (28) est surveillée et, lorsqu'elle passe en dessous d'une valeur de seuil, le chauffage (36) est mis à "l'arrêt" et/ou le signal d'erreur (74) est engendré.

4. Procédé selon les revendications 1 à 3, caractérisé en ce qu'après la fermeture et la ré-ouverture de l'interrupteur de puissance (38), le sectionneur (54) est à nouveau fermé en fonction de la tension du réseau de bord et/ou de la vitesse de rotation du moteur à combustion interne et/ou de sa température et/ou à l'expiration d'un certain intervalle de temps.

5. Procédé selon une ou plusieurs des revendications 1 à 4, caractérisé en ce que la batterie de chauffage (28) est chargée avec un courant de charge réglé.

6. Procédé selon la revendication 5, caractérisé en ce que le courant de charge est rendu optimal en fonction de la tension et/ou de la température de la batterie de chauffage (28), suivant une caractéristique de charge.

7. Procédé selon les revendications 5 ou 6, caractérisé en ce que le sectionneur (54) est conçu sous la forme d'une résistance variable destinée à commander le courant de charge.

8. Procédé de commande du chauffage électrique (36) d'un catalyseur (24) pour l'épuration des gaz d'échappement d'un moteur à combustion interne (10) dans un véhicule automobile, selon lequel il est prévu deux batteries (28, 30), qui sont reliées au réseau de bord du véhicule automobile, l'une (28) des batteries pouvant alors, par l'intermédiaire d'un interrupteur de puissance (38), être reliée, en fonction de la température et/ou de l'état de charge, au chauffage (36) du catalyseur, au moyen d'un appareil de commande électrique (60), et pouvant, dans ce cas, être isolée électriquement de la seconde batterie (30) et du réseau de bord au moyen d'un sectionneur (54), caractérisé en ce que, dans le cas où le critère "chauffage en service" est satisfait, la température du catalyseur (24) est surveillée dans le temps, par l'intermédiaire d'au moins un capteur de température (70), et en ce que, lorsqu'elle s'écarte de valeurs prédéterminées, un signal d'erreur est engendré et/ou le chauffage est mis à "l'arrêt".

9. Procédé selon une ou plusieurs des revendications précédentes, caractérisé en ce que quelques-uns ou la totalité des signaux d'erreur sont mémorisés dans une mémoire d'erreurs pouvant être lue et/ou sont affichés visuellement.
